# EUROPÄISCHE PATENTSCHRIFT

(11) **EP 1 792 029 B1**
(45) Veröffentlichungstag und Bekanntmachung des Hinweises auf die Patenterteilung: **02.04.2008**
(21) Anmeldenummer: 05777020.8
(22) Anmeldetag: 12.08.2005
(51) Int. Cl.: E04F 10/06

(54) **GELENKARM FÜR EINE MARKISE UND VERFAHREN ZU DESSEN HERSTELLUNG**
ARTICULATED ARM FOR AN AWNING AND METHOD FOR THE PRODUCTION THEREOF
BRAS D'ARTICULATION POUR STORE EN TOILE A ROULEAU, ET SON PROCEDE DE FABRICATION

(30) Priorität: 24.08.2004 DE 102004041516
(43) Veröffentlichungstag der Anmeldung: 06.06.2007
(73) Patentinhaber: Paul Voss GmbH & Co. KG, D-57413 Finnentrop-Heggen (DE)
(72) Erfinder: VOSS, Wolfgang, 57439 Attendorn (DE)
(74) Vertreter: Weller, Wolfgang
(86) Internationale Anmeldenummer: PCT/EP2005/008793
(87) Internationale Veröffentlichungsnummer: WO 2006/021333

(56) Entgegenhaltungen:
- EP-A- 1 063 367

## Beschreibung

Die Erfindung betrifft einen Gelenkarm für eine Markise, mit einem Gelenkteil und mit einem Armprofil, die ineinander gesteckt sind, und die mit einer Abziehsicherung versehen sind.

Die Erfindung betrifft ferner ein Verfahren zum Herstellen eines Gelenkarmes einer Markise, bei dem ein Gelenkteil und ein Armprofil ineinander gesteckt werden und gegen Abziehen voneinander gesichert werden.

Gelenkarme finden bei Beschattungsanlagen breiten Einsatz und dienen beispielsweise dazu, ein Markisentuch beim Ein- oder Ausfahren zu führen. Ein solcher Gelenkarm besteht aus einem Armprofil, meist einem Hohlprofil, an dessen Enden Gelenkteile angebracht sind. Die Gelenkteile weisen meist einen Zapfen auf, der in das Innere des Hohlprofils eingetrieben wird. Mittels des Gelenkteils ist der Markisenarm gelenkig, d.h. beweglich angebracht.

Je nach Ausgestaltung der Markise ist dies ein einzelner, aus einer hochstehenden in eine gekippte Lage verschwenkbarer Markisenarm, beispielsweise bei Markisoletten, oder ein aus zwei Gelenkarmen zusammengesetzter Knickarm bei Knickarmmarkisen, die im Wesentlichen horizontal oder nach unten geneigt aus- und einfahren. Markisen sind Konstruktionen, die sehr langlebig sind, wobei eine Lebensdauer von 10, 15 und 20 Jahren üblich ist.

Darüber hinaus sind Markisen während dieses Zeitraumes den rauen Umweltbedingungen ausgesetzt, da sie üblicherweise an Außenseiten von Gebäuden angebracht sind. Beim Aus- und Einfahren der Markisen, insbesondere bei Knickarmmarkisen, wirken erhebliche Kräfte auf die Verbindung zwischen Gelenkteil und Armprofil ein, wobei beim Aus- und Einfahren wechselnd erhebliche Zug- oder Stauchkräfte auf die ineinander geschobenen Bauteile einwirken.

Daher ist dafür Sorge zu tragen, dass eine Abziehsicherung vorhanden ist, die auf Dauer ein Abziehen des Armprofils vom Gelenkteil verhindert.

Es ist bekannt geworden, die Abziehsicherung durch eine Verschraubung oder einen Nietbolzen zu bewerkstelligen, die quer zur Steckrichtung durch das Armprofil und den darin eingeschobenen Zapfen des Gelenkteiles hindurchreichen.

Diese Abziehsicherung hat den Nachteil, dass sie von außen ersichtlich ist und eine Stelle bildet, an der sich unansehnliche Schmutzansammlungen oder gegebenenfalls Korrosionen bilden können, so dass auch Feuchtigkeit und Schmutz in das Innere des Armprofils eindringen kann. Im Inneren des Armprofils sind Spannvorrichtungen, wie Federn, Seile, Ketten oder dergleichen aufgenommen. Üblicherweise werden Armprofil und Gelenkteil aus Aluminium oder Aluminiumlegierungen hergestellt, die korrosionsbeständig sind. Die Schrauben oder Bolzen sind aber aus eisenhaltigen Materialien hergestellt und neigen, insbesondere im Langzeiteinsatz, zu Korrosionen.

Daher wurde zum Verbinden auf die Klebetechnik übergegangen. Dabei wurde das Maß des in das Armprofil einzuschiebenden Zapfens des Gelenkteiles so gewählt, dass es ein ausreichendes Untermaß aufweist, um zwischen die Außenseite des Zapfens und die Innenseite des Armprofils ein Klebemittel zu verbringen.

Insbesondere bei Knickarmmarkisen, die oftmals eine Breite von mehreren Metern und auch Ausfalllängen von mehreren Metern aufweisen, soll sowohl im ausgefahrenen als auch im eingefahren Zustand die äußere Ausfallstange in exakt paralleler Ausrichtung zum Gehäuse, das die Wickelwelle trägt, stehen. Winkelabweichungen aus dieser parallelen Ausrichtung von nur ein oder zwei Grad führen bei extrem breiten Markisen zu einer unansehnlichen Schieflage der Ausrichtung zwischen Ausfallstange, sei sie eingezogen oder ausgefahren, und Gehäuse.

All die zuvor erwähnten Fertigungsverfahren haben gewisse, relativ große Ungenauigkeitsfaktoren auf Grund von Toleranzen und Winkelfehlern, und die Bewerkstelligung der Verbindung ist in der Fertigung sehr aufwendig.

Bei der Verklebung müssen die Arme beispielsweise in einer speziellen Haltemaschine gehaltert und ausgerichtet werden, und es muss abgewartet werden, bis die Klebemasse vollkommen ausgehärtet ist.

Bei der Verbindung mit Nieten oder Schrauben müssen nach Aufbringen oder Aufschieben des Armprofils auf das Gelenkteil entsprechende Bohrungen angebracht und die Schrauben oder Nieten eingesetzt werden.

Dies ist sehr zeitaufwendig und behindert den Fluss der Fertigung erheblich.

Ferner, ist ein Gelenkarm nach dem Oberbegriff des Anspruchs 1 in der EP-A-1 063 367 offenbart.

Die Hersteller von Markisen streben an, die Einzelteile, insbesondere bei internationalen Vertriebsnetzen, an die Auslieferer zu versenden, die dann entsprechend aufwendig die Endfertigung der Gelenkarme durchführen müssen.

Es ist daher Aufgabe, hier Abhilfe zu schaffen und einen Gelenkarm bzw. ein Verfahren zu dessen Herstellung zu schaffen, das einfach durchzuführen ist und eine auf Dauer sichere, insbesondere abziehsichere Verbindung zwischen Armprofil und Gelenkteil sicherstellt.

Erfindungsgemäß erfolgt dies dadurch, dass Gelenkteil und Armprofil im Presssitz ineinander gesteckt sind, und dass die Abziehsicherung als zumindest eine zwischen Gelenkteil und Armprofil vorhandene, als separates Bauteil ausgebildete Kralle ausgebildet ist.

Verfahrenstechnisch werden das Gelenkteil und das Armprofil im Presssitz ineinander gesteckt und werden durch Vorsehen zumindest einer, als separates Bauteil ausgebildete Kralle zwischen Gelenkteil und Armprofil gegen Abziehen voneinander gesichert.

Der Begriff "Presssitz" im Sinne der vorliegenden Anmeldung versteht die technische Maßnahme, das Gelenkteil und das Armprofil so aufeinander abzustimmen, dass diese mit Presspassung ineinander gefügt werden. Dieser Presssitz wird nicht durch Zufälligkeiten von Fertigungstoleranzen bestimmt, was bei dem eingangs erwähnten Stand der Technik auf Grund von solchen Toleranzen der Fall sein konnte, sondern es ist eine definierte Übermaßpassung bewerkstelligt, die unabhängig von Toleranzen zu einem Presssitz oder einer so genannten Presspassung führt. Ist beispielsweise das Armteil als Hohlprofil ausgebildet, wird das Außenmaß des Zapfens des Gelenkteiles, das in den Innenraum eingetrieben wird, mit einem definierten Übermaß, zumindest an bestimmten Stellen, hergestellt, so dass zwangsläufig die Presspassung erfolgt, und nicht von Zufälligkeiten von Fertigungstoleranzen abhängt.

Der Begriff "Kralle" im Sinne der vorliegenden Anmeldung ist als eine technische Maßnahme zu verstehen, die ein Zusammenfügen von Armprofil und Gelenkteil erlaubt, ein Abziehen dieser beiden Teile voneinander durch eine formschlüssige Verbindung jedoch sperrt.

Dadurch, dass diese Kralle zwischen Gelenkteil und Armprofil vorhanden ist, ist diese von der Außenseite her nicht ersichtlich und bietet somit auch nicht die Nachteile, wie eine von der Außenseite her zu bewerkstelligende Schraub- oder Nietverbindung.

Die Kombination der Maßnahmen des Presssitzes und der Kralle schaffen zum einen den ausreichend festen Sitz zwischen den ineinander geschobenen Bauteilen, wobei dieser im Wesentlichen durch den Presssitz bewerkstelligt wird. Die Kralle hat die Aufgabe, eine zusätzliche mechanische Abziehsicherung zu bewerkstelligen.

Der "innere" Formschluss durch die Kralle stellt sicher, dass auch im Langzeitbetrieb bei den wechselnden mechanischen Belastungen, mit denen auch thermische und Umweltbelastungen parallel einhergehen, auf Dauer eine Sicherung gegen Abziehen bewerkstelligt wird. Versuche haben gezeigt, dass diese Abziehsicherung so fest ist, dass ein zerstörungsfreies Lösen nahezu nicht mehr möglich ist.

Die Montage ist ohne besondere Apparaturen, insbesondere Ausrichtapparaturen, oder aufwendige Maßnahmen wie Bohrungen oder dergleichen, zu bewerkstelligen.

Die Kralle kann dabei als separates Bauteil, als ein Bauteil des Gelenkteils und/oder ein Bauteil des Armprofils ausgebildet sein, und wird beim Eintreiben des Gelenkteils in das Armprofil, oder entsprechend umgekehrt beim Aufschieben des Armprofils auf das Gelenkteil, zwangsweise zwischen diese gebracht und "frisst" oder "krallt" sich zwischen diese derart ein, dass ein Ineinanderschieben noch möglich ist, ein Abziehen jedoch gesperrt wird.

Somit kann nicht nur eine optisch ansprechende Verbindung ohne eine von der Außenseite ersichtliche Abziehsicherung bewerkstelligt werden, sondern es ist auch an der Verbindungsstelle keine anfällige Öffnung mit Verbindung zur Außenseite zwischen Innenraum und Außenseite des Armprofils gegeben, so dass hier keine Korrosionen stattfinden können.

Der Endhersteller kann, je nach Ausgestaltung der Markise, das Armprofil, das üblicherweise als Endlosprofil ausgebildet ist, entsprechend ablängen und dann durch Zusammenfügen mit einem entsprechenden Werkzeug die Verbindung zwischen Gelenkteil und Armprofil schaffen, was einfach durchzuführen ist.

In einer weiteren Ausgestaltung der Erfindung sind am Gelenkteil und am Armprofil Eingriffsflächen vorhanden, die definiert beim Ineinanderstecken im Presssitz aneinander zum Liegen kommen.

Diese Maßnahme hat den Vorteil, dass die Art und das Ausmaß des Presssitzes durch diese Eingriffsflächen klar definiert wird und zu einem kalkulierbaren, vorberechenbaren Presssitz bestimmter Festigkeit führt.

In einer weiteren Ausgestaltung der Erfindung liegt zumindest eine Eingriffsfläche an einem beim Ineinanderstecken verformbaren Element.

Die im Markisenbau üblicherweise verwendeten Materialien, d.h. Aluminium oder Aluminiumlegierungen, sind Materialien, die einer definierten Kaltverformung gut zugänglich sind. Das Ausmaß und die Festigkeit des Presssitzes können somit durch das Vorsehen entsprechend verformbarer Elemente gesteuert werden.

In einer weiteren Ausgestaltung der Erfindung ist das Armprofil als Hohlprofil ausgebildet, von dessen Innenseite verformbare Elemente vorspringen.

Diese Maßnahme hat den Vorteil, dass diese verformbaren Elemente im Strangguss in gewünschtem Maß, Form und Stärke bei Hohlprofilen hergestellt werden können, und, ungeachtet, wie lange ein solches Armprofilstück abgelängt werden muss, über dessen gesamte Länge zur Verfügung stehen können.

Dies erleichtert erheblich den konstruktiven Aufwand für diese technische Maßnahme der definierten Verformbarkeit.

In einer weiteren Ausgestaltung der Erfindung sind diese verformbaren Elemente als Längsstege ausgebildet.

Diese Maßnahme hat den Vorteil, dass solche Längsstege besonders einfach bei der originären Herstellung der Armprofile als Stranggussprofile ausgebildet werden können.

In einer weiteren Ausgestaltung der Erfindung ist zumindest eine Flanke eines Längssteges als Eingriffsfläche ausgebildet.

Diese Maßnahme hat den Vorteil, dass ein solcher Längssteg mit einer ganz bestimmten, dafür vorgesehenen und ausgebildeten Flanke mit dem Gelenkteil in Verbindung treten kann und somit dieser Eingriff gesteuert und sicher durchgeführt werden kann.

In einer weiteren Ausgestaltung der Erfindung weist das Gelenkteil einen in das Armprofil einsteckbaren Zapfen auf, der eine Eingriffsfläche mit dem Armprofil aufweist.

Diese Maßnahme hat wiederum den fertigungstechnischen Vorteil, dass schon bei der Herstellung des Gelenkteils die entsprechende Eingriffsfläche bewerkstelligt werden kann, die dann mit dem Armprofil zusammenwirkt.

Dabei können die zuvor erwähnten verformbaren Elemente sowohl am Armprofil als auch am Gelenkteil vorhanden sein, sie können aber auch nur an einem der beiden Teile vorhanden sein.

In einer weiteren Ausgestaltung der Erfindung sind im Zapfen Nuten und/oder Aussparungen vorhanden, deren Flanken als Eingriffsfläche mit verformbaren Elementen am Armprofil in Eingriff kommen.

Diese Maßnahme hat, insbesondere in fertigungstechnischer Hinsicht, den Vorteil, dass die Eingriffsflächen und die durch diese gegebenenfalls verformbaren Elemente schon bei der originären Herstellung der Teile bewerkstelligt werden können. Wie zuvor erwähnt, kann dies durch Vorsehen von Stegen an der Innenseite des Hohlprofils des Armteils bewerkstelligt werden, und beim Gelenkteil durch Vorsehen entsprechender Nuten oder Aussparungen. Auch die Gelenkteile werden üblicherweise als Gussteile hergestellt, so dass bereits bei der originären Herstellung diese Eingriffsflächen bewerkstelligt werden können, ohne dass weitere Bearbeitungsvorgänge, wie Fräsvorgänge oder dergleichen, notwendig sind.

In einer weiteren Ausgestaltung der Erfindung sind im Zapfen in Steckrichtung verlaufende Eingriffsflächen vorhanden, die gegenüber der Steckrichtung geneigt verlaufen.

Diese Maßnahme hat den Vorteil, dass beim Ineinanderschieben von Gelenkteil und Armprofil zunächst kein hoher Kraftaufwand notwendig ist, diese also aneinander angesetzt und über eine gewisse Strecke eingefädelt werden können. Erst beim fortschreitenden Ineinanderstecken beider Teile kommen die Eingriffsflächen in Eingriff, und der Presssitz wird bewerkstelligt.

In einer weiteren Ausgestaltung der Erfindung sind im Zapfen in Steckrichtung zwei Nuten eingeschnitten, die in Steckrichtung konvergieren.

Diese Maßnahme hat den zuvor erwähnten Vorteil, dass beispielsweise in diese beiden Nuten entsprechende Stege des Armprofils eingeschoben werden können und zunächst als Führung dienen, so dass eine exakte Ausrichtung zwischen Gelenkteil und Armprofil vorhanden ist, und dann durch die Konvergenz die Eingriffsflächen definiert mehr und mehr in Eingriff treten.

Dies ermöglicht beispielsweise, zunächst das Gelenkteil in das Armprofil von Hand einzustecken und dann mit einem Werkzeug, beispielsweise mit einem Hammer oder einem Vorschubzylinder, weiter einzutreiben.

In einer Ausgestaltung der Erfindung ist die Kralle als separates Bauteil ausgebildet.

Diese Maßnahme hat den Vorteil, dass die Kralle hinsichtlich der Auswahl der Materialien und der Konstruktion unabhängig von der Konstruktion und Auswahl der Materialien von Armprofil und Gelenkteil ist.

So kann beispielsweise die Kralle aus solchen Materialien hergestellt werden, die sich in die relativ weichen aluminiumhaltigen Materialien einfressen können, und dann die entsprechend starken Kräfte aufnehmen können, um einem Abziehen entgegenzuwirken.

In einer weiteren Ausgestaltung der Erfindung ist die Kralle am Gelenkteil anbringbar.

Diese Maßnahme hat den Vorteil, dass gängige, übliche Hohlprofile als Armprofile einsetzbar sind und an diesen keine zusätzlichen Maßnahmen zur Bewerkstelligung des Verkrallens vorgesehen werden müssen. Auch die Handhabung ist vereinfacht, es wird nämlich die Kralle am Gelenkteil angebracht und anschließend dieser Zusammenbau in das Hohlprofil eingetrieben.

In einer weiteren Ausgestaltung der Erfindung ist die Kralle in eine Ausnehmung am Gelenkteil fest sitzend anbringbar.

Diese Maßnahme hat den Vorteil, dass vor Ort, beispielsweise unter Berücksichtigung der entsprechenden Gegebenheiten der Ausgestaltung, insbesondere der Ausfalllänge und der Breite der Markise, eine entsprechende Kralle ausgewählt werden kann, in die Ausnehmung eingesetzt werden kann, und dann dieser Zusammenbau aus Gelenkteil und Kralle vor Ort in das Profil eingetrieben werden kann.

In einer weiteren Ausgestaltung der Erfindung ist die Kralle als flächiges Stanzteil ausgebildet, aus dessen Ebene zumindest eine Zunge vorsteht.

Diese Maßnahme hat den Vorteil, dass durch einen sehr einfachen Fertigungsvorgang jeweils geeignete Krallen bereitgestellt werden können, die kostengünstig als einfaches Massenfertigungsteil hergestellt werden können. Der Monteur wählt dann eine entsprechende Kralle aus und setzt diese ein. Die Zungen sind so ausgebildet, dass sie beim Eintreiben, also beim Zusammenfügen von Gelenkteil und Armprofil, niedergedrückt werden, sich aber dabei schon in das Material einfressen, ein Abziehen aber dann durch diesen formschlüssigen Eingriff sperren.

Es versteht sich, dass die vorstehend genannten und die nachstehend noch zu erläuternden Merkmale nicht nur in den jeweils angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: eine perspektivische Ansicht einer Markise in Form einer Knickarmmarkise mit erfindungsgemäßen Gelenkarmen in einem Zustand, bei dem das Tuch samt Ausfallstange ausgefahren ist,
- Fig. 2: eine stark vergrößerte perspektivische Explosionsansicht eines Gelenkarms der Markise von Fig. 1 vor dem Zusammensetzen, mit einem Armprofil und mit der Kralle von dem Gelenkteil abgehoben,
- Fig. 3: eine teilweise aufgebrochene Seitenansicht der Teile von Fig. 2 nach dem Zusammenbau,
- Fig. 4: eine Draufsicht auf die Kralle als noch nicht gebogenes Stanzteil,
- Fig. 5: einen Schnitt längs der Linie V-V von Fig. 2 mit aufgesetzter Kralle,
- Fig. 6: einen Schnitt längs der Linie VI-VI in Fig. 3, wobei in der linken Hälfte ein Schnitt lediglich durch das Armprofil vor Eintreiben des Gelenkteils, in der rechten Hälfte ein Schnitt nach Eintreiben des Armprofils dargestellt ist,
- Fig. 7: eine Seitenansicht eines Gelenkteils einer weiteren Ausführungsform, wobei ein aufgeschobenes Armprofil angedeutet ist,
- Fig. 8: eine der Darstellung von Fig. 4 vergleichbare Darstellung eines weiteren Ausführungsbeispiels einer Kralle in Form eines Stanzteils, und
- Fig. 9: eine stark vergrößerte Darstellung eines Schnittes im Bereich der eingelegten Kralle von Fig. 7.

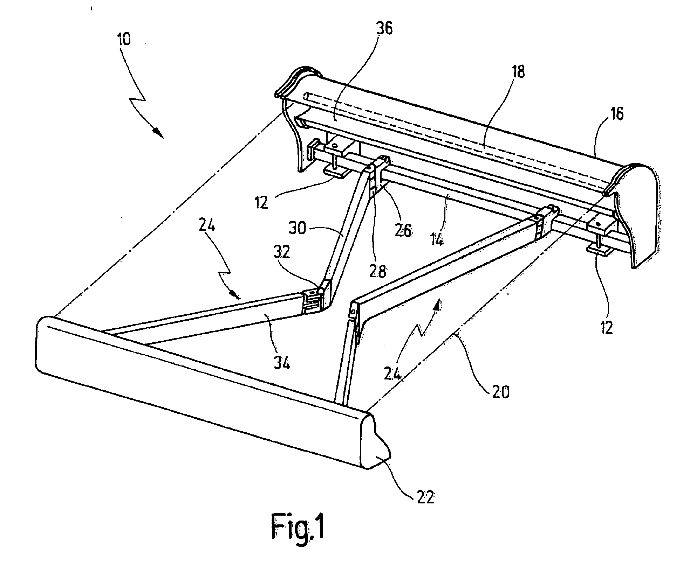

Eine in Fig. 1 dargestellte Markise ist in ihrer Gesamtheit mit der Bezugsziffer 10 versehen.

Die Markise 10 ist über zwei Wandkonsolen 12 beispielsweise an einer Außenwand eines hier nicht dargestellten Gebäudes befestigt. Die Wandkonsolen 12 tragen ein Tragrohr 14, hier mit rechteckigem Profil, das als tragendes Bauteil der Markise 10 wirkt. Von dem Tragrohr 14 ist eine Hülse 16 getragen, in der die Wickelwelle 18 aufgenommen ist, auf der das Tuch 20 aufgewickelt ist bzw. von dieser abgewickelt wird.

Das äußere Ende, das so genannte Ausfallende, des Tuches 20 ist mit einer Ausfallstange 22 verbunden. Zwischen Ausfallstange 22 und Tragrohr 14 erstrecken sich zwei spiegelbildlich ausgebildete Knickarme 24. Jeder Knickarm 24 ist über einen Tragbock 26 längsverschiebbar am Tragrohr 14 angebracht. Der Tragbock 26 ist mit einem Gelenkteil 28 verbunden, auf das ein Armprofil 30 aufgesteckt ist. Am gegenüberliegenden Ende ist das Armprofil 30 mit einem Gelenk 32 verbunden, das mit einem weiteren Armprofil 34 verbunden ist, dessen äußeres Ende wieder über ein entsprechendes, hier nicht ersichtliches Gelenkteil mit der Ausfallstange 22 verbunden ist.

In den als Hohlprofile ausgebildeten Armprofilen sind hier nicht weiter ersichtliche Federelemente aufgenommen, die dahingehend wirken, die Knickarme auszustrecken, also die Ausfallstange 22 von der Wickelwelle 18 wegzudrücken, so dass das Tuch 20 in jedem Ausfahrzustand straff gespannt ist und nicht unansehnlich wellig durchhängt.

Diese erheblichen Zugkräfte ziehen auch an der Verbindung zwischen Gelenkteil 28 und Armprofil 30 und wirken in Richtung Lösen dieser Verbindung, was ja durch die Erfindung in einfacher Weise ausgeschaltet werden soll.

Das Tuch 20 wird aus einem Schlitz 36 der Hülse 16 abgezogen. Es ist ein Bestreben, die Ausfallstange 22 immer exakt parallel ausgerichtet zu diesem Schlitz 36 der Hülse 16 zu halten. Dies zum einen aus optischen Gründen, bei eingezogenem Tuch 20 aber auch deswegen, um einen dichten, sauberen Abschluss des Schlitzes 36 zu bewerkstelligen.

Lockert sich z.B. die Verbindung zwischen Gelenkteil 28 und Armprofil 30 oder ist diese nicht auf Dauer stabil, resultieren unansehnliche Fehlausrichtungen zwischen Ausfallstange 22 und Hülse 16, die je nach Art der Fehlausrichtung, je nach Breite der Markise und je nach Ausfalllänge mehr oder weniger ausgeprägt sein können und auch in unterschiedlicher Richtung bestehen können.

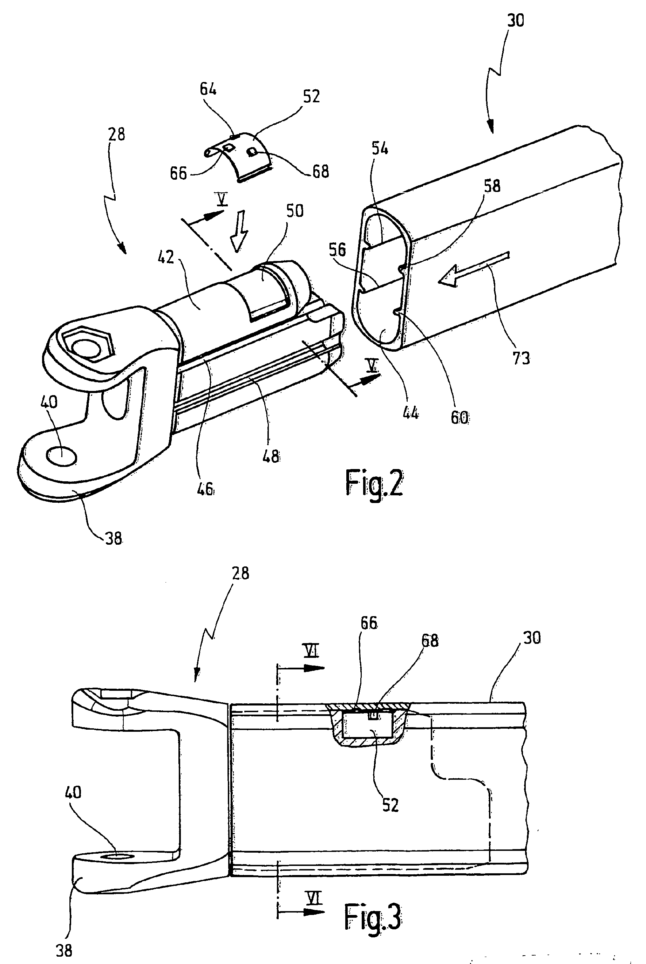

In Fig. 2 sind das Gelenkteil 28 und das Armprofil 30 in einer Situation unmittelbar vor der Montage dargestellt. Die im Zusammenhang mit dem Gelenkteil 28 zu beschreibenden Ausgestaltungen und Montagevorgänge gelten gleichermaßen auch für die weiteren Gelenkteile des Gelenkes 32 bzw. das Gelenkteil zur Verbindung mit der Ausfallstange 22.

Das Gelenkteil 28 weist an einem Ende eine Gabel 38 auf, die in beiden Zinken ein durchgehendes Auge 40 aufweist. Dies dient zur Befestigung an dem Tragbock 26 und stellt auch die hochstehende Schwenkachse des Knickarmes 24 dar. Von der Gabel 28 steht ein Zapfen 42 vor, der so ausgebildet ist, dass er in einen Innenraum 44 des Armprofils 30 eingetrieben werden kann. An der dem Betrachter zugewandten Seite weist der Zapfen 42 zwei in Steckrichtung 73 bzw. in Längsrichtung des Armprofils 30 verlaufende Nuten 46 und 48 auf, die in Steckrichtung 73, also auf die Gabel 38 zu gesehen, etwas konvergieren, und zwar in einem Winkel von ca. 1 bis 2 Grad.

An der in Fig. 2 ersichtlichen oberen Seite des Zapfens 42 ist eine Ausnehmung 50 vorgesehen, in die eine Kralle 52, wie nachfolgend näher beschrieben, eingesetzt bzw. eingeclipst werden kann.

Das Armprofil 30 ist als langerstrecktes hohles Stranggussprofil ausgebildet, von dessen Innenseite vier Stege 54, 56, 58, 60 vorspringen. Diese Stege 54 - 60 erstrecken sich über die gesamte Längserstreckung des Armprofils 30 und werden beim Stranggussvorgang ausgebildet.

Das Armprofil 30 hat einen etwa ovalen Querschnitt, und die Lage und Ausgestaltung der Stege 58 und 60 ist derart, dass diese in die Nuten 46 und 48 am Zapfen 42 des Gelenkteils 28 einfahren können.

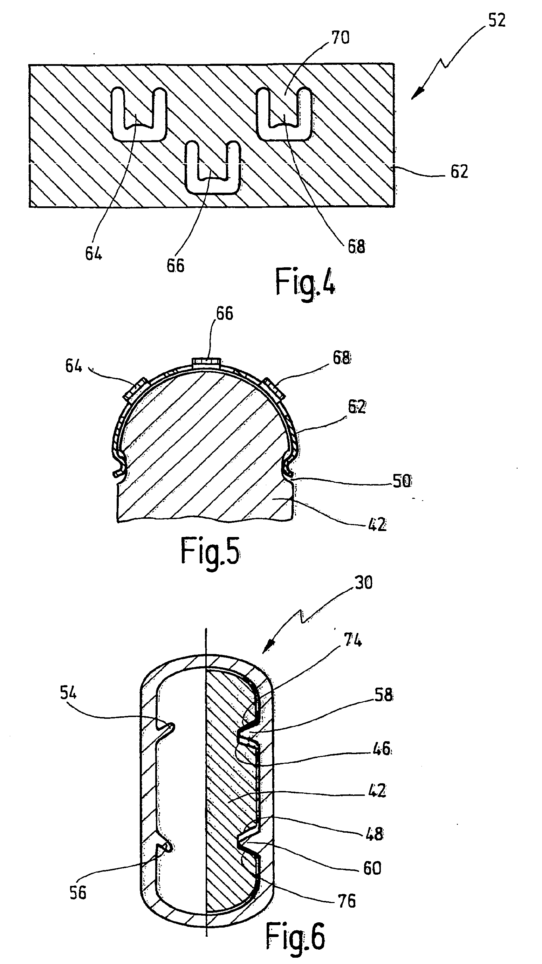

Wie das nachfolgend noch näher im Zusammenhang mit Fig. 6 beschrieben wird, sind die Nuten 46 und 48 so ausgebildet, dass das Armprofil 30 bzw. dessen Stege 58 und 60 zunächst in den Nuten 46 und 48 mit seitlichem Spiel angesetzt und somit das Armprofil 30 über eine gewisse Strecke auf den Zapfen 42 nahezu widerstandslos aufgeschoben werden kann.

Zunächst soll im Zusammenhang mit Figuren 4 und 5 die Ausgestaltung der Kralle 52 näher beschrieben werden.

Aus Fig. 4 ist ersichtlich, dass die Kralle 52 als rechteckförmiges Stanzteil 62 ausgebildet ist, aus dem drei Zungen 64, 66 und 68 ausgestanzt sind.

Das Stanzteil 62 besteht aus einer Federstahllegierung.

Aus der in Fig. 4 dargestellten ebenen Ausrichtung wird das Stanzteil 62 in die in Fig. 2 bzw. in Fig. 5 ersichtliche gebogene Ausrichtung gebracht, wobei die drei Zungen 64, 66 und 68 aus der Ebene des Stanzteiles 62 heraus gebogen werden.

Das so gebogene Stanzteil 62 wird in die Ausnehmung 50 eingesetzt bzw. aufgeclipst, und zwar derart, dass die Wurzel 70 jeder Zunge 64, 66, 68 dem Armprofil 30 zugewandt ist, die entsprechende hochgebogene Spitze jeder Zunge der Gabel 38 des Gelenkteiles 28 zugewandt ist.

Beim Eintreiben des Zapfens 42 in den Innenraum 44 des Armprofils 40 werden die Zungen 64, 66, 68 bzw. deren Spitzen entsprechend den Fertigungstoleranzen etwas nach unten gedrückt, fressen sich aber schon in das Material an der Innenseite des Armprofils 30 hinein.

Diese Situation ist in dem Schnitt von Fig. 3 dargestellt. Dadurch bildet sich eine formschlüssige Verzahnung oder Verkrallüng zwischen den Zungen 64, 66, 68 und dem Material des Armprofils 30, die so ausgebildet ist, dass entgegen der Steckrichtung 73 ein Abziehen gesperrt ist. Eine solche Abziehbewegung würde ja ein Aufrichten und ein weiteres Einfressen der Zungen 64, 66, 68 in das Material des Armprofils 34 verursachen, also ein noch festeres Verkrallen der beiden Bauteile, Gelenkteil 28 und Armprofil 34. Dieses Verkrallen bzw. dieser formschlüssige Eingriff besteht auch auf Dauer und auch bei wechselnden Zug- und Druckbelastungen und widersteht auch thermischen Verformungen oder Belastungen, wobei dies insbesondere durch die Elastizität der ausgebogenen Zungen 64 - 68 bewerkstelligt wird. Versuche haben gezeigt, dass ein Abziehen des Armprofils 30 vom Gelenkteil 28 nur mit so hohen Kräften möglich ist, die beim Betrieb einer Markise nicht auftreten, und auch dann nur unter teilweiser Zerstörung der Materialien. Dauertests mit wechselnden Zug- und Schiebebelastungen haben gezeigt, dass auf Grund der Elastizität der Zungen ein auf Dauer abziehsicherer Sitz gewährleistet ist.

Die Montage selbst ist einfach durchzuführen, der Monteur clipst die Kralle 52, wie dies in Fig. 2 durch einen Pfeil dargestellt ist, einfach auf die Ausnehmung 50 auf, und anschließend wird das Gelenkteil 28 in das entsprechend der örtlichen Gegebenheiten abgelängte Armprofil 30 eingetrieben.

Aus der Schnittdarstellung von Fig. 6 ist ersichtlich, dass die Stege 54, 56 so angeformt sind, dass sie zur schmaleren Profilseite hin etwas gebogen sind.

Das Profil der Nuten 46 und 48 an der Außenseite des Zapfens 42 ist nun derart, dass die Stege 58 und 60 zunächst mit Querspiel in die Nuten 46, 48 eingeführt werden können. Die in der Darstellung von Fig. 6 obere Flanke 74 der Nut 46 tritt dann mit dem nach oben gebogenen Steg 58 in Berührung und biegt diesen beim weiteren Eintreiben etwas nach unten. Mit anderen Worten ausgedrückt, bilden die Flanke 74 der Nut 46 und die entsprechende gegenüberliegende Flanke des Steges 58 klar definierte Eingriffsflächen, die für eine exakte Führung bei der Verformung dienen. Dieser Eingriff wird durch ein Konvergieren der Nuten 46 und 48 in Richtung Gabel 38 nach und nach stärker. Der Konvergenzwinkel liegt bei ca. 1 bis 2 Grad.

Entsprechendes gilt für die Flanke 76 der unteren Nut 48 des Zapfens 42, die entsprechend mit der Flanke des unteren Steges 60 in Eingriff kommt und diesen etwas nach oben verbiegt. Dadurch wird ein ganz definierter Presssitz bestimmten Ausmaßes, also eines bestimmten Flächen- und Kraftmaßes, ausgebildet.

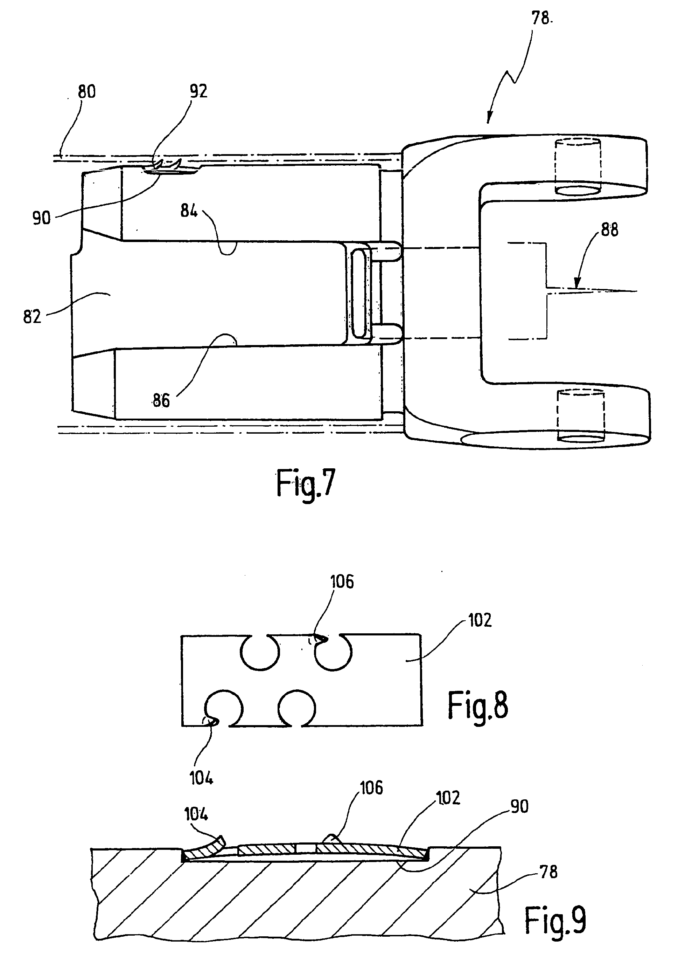

In den Figuren 7 bis 9 ist eine weitere Ausgestaltung eines Gelenkteiles 78 dargestellt, das im Prinzip gleich aufgebaut ist wie das Gelenkteil 28.

Im Gelenkteil 78 ist in dessen Zapfen eine Aussparung 82 ausgenommen, deren gegenüberliegende Flanken 84 und 86 unter einem geringen Winkel 88 in Richtung Gabel konvergierend verlaufen, auch hier etwa um einen Winkel von 1,5 Grad.

Die Wirkung dieser beiden Flanken 84 und 86 ist entsprechend wie die zuvor beschriebene Wirkung der Flanken 74 und 76 der Nuten 46 und 48.

Mit anderen Worten kann auf das Gelenkteil 78 auch das zuvor beschriebene Armprofil 30 gleicher Ausgestaltung aufgeschoben werden.

In dieser Ausgestaltung steht durch die Aussparung 82 ausreichend Platz zur Verfügung, um beispielsweise durch das Gelenkteil 78 Seile oder Ketten der in den Armprofilen aufgenommenen Spannvorrichtung aufzunehmen und durchzuführen.

Es ist auch möglich, das Gelenkteil 28 auf der einen Seite so auszugestalten, wie es aus Fig. 2 ersichtlich ist, und auf der gegenüberliegenden Seite so auszugestalten, wie es in Fig. 7 ersichtlich ist.

Wie insbesondere aus den Figuren 8 und 9 ersichtlich ist, ist hier die Kralle 92 ebenfalls als Stanzteil 102 ausgebildet, aus dem hier beispielsweise zwei Zungen 104 und 106 hochgebogen sind.

Das Stanzteil 102 wird nicht verformt, wie das zuvor beschriebene Stanzteil 62, sondern wird in eine Ausnehmung 90 an einer oberen Längskante des Gelenkteils 78 eingesetzt, wobei, wie in Fig. 9 ersichtlich, dies dabei etwas bauchig aufgewölbt, also unter Spannung eingesetzt ist, somit unverlierbar in der Ausnehmung 90 gehalten ist. Auch hier sind dann die Zungen 104 und 106 wieder so ausgerichtet, dass ein Aufschieben eines Armprofils 80, wie das in Fig. 7 angedeutet ist, auf das Gelenkteil 78 möglich ist, sich dabei die Zungen 104 und 106 in das Material hineinfressen und verkrallen und gegen ein Abziehen sperren.

## Patentansprüche

1. Gelenkarm für eine Markise (10), mit einem Gelenkteil (28, 78) und mit einem Armprofil (30, 80), die im Presssitz ineinander gesteckt sind und mit einer Abziehsicherung, **dadurch gekennzeichnet, dass** die Abziehsicherung als zumindest eine zwischen Gelenkteil (28, 78) und Armprofil (30, 80) vorhandene, als separates Bauteil ausgebildete Kralle (52, 92) ausgebildet ist.

2. Gelenkarm nach Anspruch 1, **dadurch gekennzeichnet, dass** am Gelenkteil (28, 78) und am Armprofil (30, 80) Eingriffsflächen vorhanden sind, die definiert beim Ineinanderstecken im Presssitz aneinander zum Liegen kommen.

3. Gelenkarm nach Anspruch 2, **dadurch gekennzeichnet, dass** zumindest eine Eingriffsfläche an einem beim Ineinanderstecken verformbaren Element liegt.

4. Gelenkarm nach Anspruch 3, **dadurch gekennzeichnet, dass** das Armprofil (30, 80) als Hohlprofil ausgebildet ist, von dessen Innenseite verformbare Elemente vorspringen.

5. Gelenkarm nach Anspruch 4, **dadurch gekennzeichnet, dass** die verformbaren Elemente als Längsstege (54 - 60) ausgebildet sind.

6. Gelenkarm nach Anspruch 5, **dadurch gekennzeichnet, dass** zumindest eine Flanke eines Längssteges (54 - 60) als Eingriffsfläche ausgebildet ist.

7. Gelenkarm nach einem der Ansprüche 1 bis 6, **dadurch gekennzeichnet, dass** das Gelenkteil (28, 78) einen in das Armprofil (30, 80) einsteckbaren Zapfen (42) aufweist, der eine Eingriffsfläche mit dem Armprofil (30, 80) aufweist.

8. Gelenkarm nach Anspruch 7, **dadurch gekennzeichnet, dass** im Zapfen (42) Nuten (46, 48) und/oder Aussparungen (82) vorhanden sind, deren Flanken (74, 76; 84, 86) als Eingriffsflächen mit den verformbaren Elementen am Armprofil (30, 80) in Eingriff kommen.

9. Gelenkarm nach Anspruch 8, **dadurch gekennzeichnet, dass** im Zapfen (42) in Steckrichtung (73) verlaufende Eingriffsflächen vorhanden sind, die gegenüber der Steckrichtung (73) geneigt verlaufen.

10. Gelenkarm nach Anspruch 9, **dadurch gekennzeichnet, dass** im Zapfen (42) in Steckrichtung (73) zwei Nuten (46, 48) eingeschnitten sind, die in Steckrichtung (73) konvergieren.

11. Gelenkarm nach Anspruch 1, **dadurch gekennzeichnet, dass** die Kralle (52, 92) am Gelenkteil (28, 78) anbringbar ist.

12. Gelenkarm nach Anspruch 11, **dadurch gekennzeichnet, dass** die Kralle (52, 92) in eine Ausnehmung (50, 90) am Gelenkteil (28, 78) fest sitzend einbringbar ist.

13. Gelenkarm nach einem der Ansprüche 1 bis 12, **dadurch gekennzeichnet, dass** die Kralle (52, 92) als flächiges Stanzteil (62, 102) ausgebildet ist, aus dessen Ebene zumindest eine Zunge (64 - 68; 104, 106) vorsteht.

14. Verfahren zum Herstellen eines Gelenkarmes einer Markise, bei dem ein Gelenkteil (28, 78) und ein Armprofil (30, 80) im Presssitz ineinander gesteckt werden und gegen Abziehen voneinander gesichert werden, **dadurch gekennzeichnet, dass** durch Vorsehen zumindest einer als separates Bauteil ausgebildete Kralle (52, 92) zwischen Gelenkteil (28, 78) und Armprofil (30, 80) diese gegen Abziehen voneinander gesichert werden.

15. Verfahren nach Anspruch 14, **dadurch gekennzeichnet, dass** in einem Zapfen (42) des Gelenkteils (28, 78) die Kralle (52, 92) angebracht wird, und dass der Zusammenbau in das als Hohlprofil ausgebildete Armprofil (30, 80) eingetrieben wird.

## Claims

1. Articulated arm for an awning (10), with an articulation part (28, 78) and with an arm profile (30, 80), which are inserted one into the other with a press fit, and with a pull-off protection, **characterized in that** the pull-off protection is designed as at least one claw (52, 92) designed as a separate component, and present between the articulation part (28, 78) and arm profile (30, 80).

2. Articulated arm of claim 1, **characterized in that**, on the articulation part (28, 78) and on the arm profile (30, 80), engagement surfaces are present, which come to lie one against the other with a press fit in a defined manner during insertion one into the other.

3. Articulated arm of claim 2, **characterized in that** at least one engagement surface lies against an element which is deformable during insertion one into the other.

4. Articulated arm of claim 3, **characterized in that** the arm profile (30, 80) is designed as a hollow profile, from the inside of which deformable elements project.

5. Articulated arm of claim 4, **characterized in that** the deformable elements are designed as longitudinal webs (54 - 60).

6. Articulated arm of claim 5, **characterized in that** at least one flank of a longitudinal web (54 - 60) is designed as an engagement surface.

7. Articulated arm of anyone of claims 1 to 6, **characterized in that** the articulation part (28, 78) has a tenon (42) which can be inserted into the arm profile (30, 80) and which has an engagement surface with the arm profile (30, 80).

8. Articulated arm of claim 7, **characterized in that**, in the tenon (42), grooves (46, 48) and/or clearances (82) are present, the flanks (74, 76; 84, 86) of which come into engagement as an engagement surface with the deformable elements on the arm profile (30, 80).

9. Articulated arm of claim 8, **characterized in that**, in the tenon (42), engagement surfaces are present which run in the insertion direction (73) and which have an inclination with respect to the insertion direction (73).

10. Articulated arm of claim 9, **characterized in that** two grooves (46, 48) which converge in the insertion direction (73) are indented in the tenon (42) in the insertion direction (73).

11. Articulated arm of claim 1, **characterized in that** the claw (52, 92) can be attached to the articulation part (28, 78).

12. Articulated arm of claim 11, **characterized in that** the claw (52, 92) can be introduced with a firm fit into a recess (50, 90) on the articulation part (28, 78).

13. Articulated arm of anyone of claims 1 to 12, **characterized in that** the claw (52, 92) is designed as a sheet-like stamping (62, 102), out of the plane of which at least one tongue (64 - 68; 104, 106) projects.

14. Method for the production of an articulated arm of an awning, in which an articulation part (28, 78) and an arm profile (30, 80) are inserted one into the other with a press fit and are protected against being pulled off from one another, **characterized in that** by the provision of at least one claw (52, 92) designed as a separate component between the articulation part (28, 78) and the arm profile (30, 80), these are protected from being pulled off from one another.

15. Method of claim 15, **characterized in that** the claw (52, 92) is attached in a tenon (42) of the articulation part (28, 78), and **in that** the assembly is driven into the arm profile (30, 80) designed as a hollow profile.

## Revendications

1. Bras articulé pour un store (10), avec une pièce d'articulation (28, 78) et avec un profilé de bras (30, 80) qui sont emboîtés l'un dans l'autre en ajustement serré, et avec une sécurité contre l'extraction, **caractérisé en ce que** la sécurité contre l'extraction est réalisée sous la forme d'au moins un crampon (52, 92) réalisé sous forme de pièce séparée, présent entre la pièce d'articulation (28, 78) et le profilé de bras (30, 80).

2. Bras articulé selon la revendication 1, **caractérisé en ce que** des surfaces d'engagement sont présentes sur la pièce d'articulation (28, 78) et sur le profilé de bras (30, 80), qui viennent se placer l'une contre l'autre en ajustement serré d'une manière définie lors de l'emboîtement.

3. Bras articulé selon la revendication 2, **caractérisé en ce qu'**au moins une surface d'engagement se situe sur un élément déformable lors de l'emboîtement.

4. Bras articulé selon la revendication 3, **caractérisé en ce que** le profilé de bras (30, 80) est réalisé sous forme de profilé creux, des éléments déformables faisant saillie de sa face intérieure.

5. Bras articulé selon la revendication 4, **caractérisé en ce que** les éléments déformables sont réalisés sous la forme de nervures longitudinales (54 - 60).

6. Bras articulé selon la revendication 5, **caractérisé en ce qu'**au moins un flanc d'une nervure longitudinale (54 - 60) est conçu comme surface d'engagement.

7. Bras articulé selon l'une des revendications 1 à 6, **caractérisé en ce que** la pièce d'articulation (28, 78) présente un tenon (42) qui peut être emboîté dans le profilé de bras (30, 80) et qui présente une surface d'engagement avec le profilé de bras (30, 80).

8. Bras articulé selon la revendication 7, **caractérisé en ce que** des rainures (46, 48) et/ou des évidements (82) sont présents dans le tenon (42), dont les flancs (74, 76 ; 84, 86), en tant que surface d'engagement, viennent en prise avec les éléments déformables sur le profilé de bras (30, 80).

9. Bras articulé selon la revendication 8, **caractérisé en ce que** des surfaces d'engagement s'étendant dans la direction d'emboîtement (73) sont présentes dans le tenon (42), lesquelles s'étendent de façon inclinée par rapport à la direction d'emboîtement (73).

10. Bras articulé selon la revendication 9, **caractérisé en ce que** deux rainures (46, 48), qui convergent dans la direction d'emboîtement (73), sont ménagées dans la direction d'emboîtement (73) dans le tenon (42).

11. Bras articulé selon la revendication 1, **caractérisé en ce que** le crampon (52, 92) peut être installé sur la pièce d'articulation (28, 78).

12. Bras articulé selon la revendication 11, **caractérisé en ce que** le crampon (52, 92) peut être introduit en ajustement bloqué dans un évidement (50, 90) prévu sur la pièce d'articulation (28, 78).

13. Bras articulé selon l'une des revendications 1 à 12, **caractérisé en ce que** le crampon (52, 92) est réalisé sous forme de pièce découpée (62, 102) à deux dimensions du plan de laquelle dépasse au moins une languette (64 - 68 ; 104, 106).

14. Procédé de fabrication d'un bras articulé d'un store, selon lequel une pièce d'articulation (28, 78) et un profilé de bras (30, 80) sont emboîtés l'un dans l'autre en ajustement serré et sont empêchés d'être extraits l'un de l'autre, **caractérisé en ce que** la pièce d'articulation (28, 78) et le profilé de bras (30, 80) sont empêchés d'être extraits l'un de l'autre en prévoyant entre eux au moins un crampon (52, 92) réalisé sous forme de pièce séparée.

15. Procédé selon la revendication 14, **caractérisé en ce que** le crampon (52, 92) est installé dans un tenon (42) de la pièce d'articulation (28, 78), et **en ce que** l'ensemble est enfoncé dans le profilé de bras (30, 80) réalisé sous forme de profilé creux.
